# DEMANDE DE BREVET EUROPEEN

(11) **EP 2 363 982 A1**
(43) Date de publication de la demande: **07.09.2011**
(21) Numéro de dépôt: 10196979.8
(22) Date de dépôt: 24.12.2010
(51) Int. Cl.: H04L 12/56

(54) **Procédé de détection d'une défaillance d'un routeur**

(30) Priorité: 01.03.2010 FR 1051461
(71) Demandeur: Alcatel Lucent, 75007 Paris (FR)
(72) Inventeur: Vidalenc, Bruno, 91620, Nozay (FR)
(74) Mandataire: Chaffraix, Sylvain

(57) **Abrégé**

La présente invention concerne un procédé de détection d'une défaillance d'un routeur (102) dans un réseau (100) transmettant des données entre routeurs (102, 104, 106, ...114) sous la forme de paquets, lesdits routeurs (102, 104, 106, ...114) implémentant un protocole de détection de désactivations de routeurs via des messages de contrôle (103) tels que, un routeur contrôlé (102) transmettant périodiquement des messages de contrôle (103) à au moins un routeur contrôleur (104, 106, 108), une désactivation dudit routeur contrôlé (102) est détecté par ledit au moins un routeur contrôleur (104, 106, 108) lorsqu'un nombre significatif de messages de contrôle (103) sont manquants à la réception dudit au moins un routeur contrôleur (104, 106, 108), caractérisé en ce qu'il comprend les étapes suivantes:
- L'étape pour ledit routeur contrôlé (102) de déterminer un risque de défaillance et une période de transmission des messages de contrôle (103) dépendant de ce risque de défaillance, et
- L'étape pour ledit routeur contrôlé (102) d'informer l'au moins un routeur contrôleur (104, 106, 108) de la nouvelle période de transmission des messages de contrôle (103).

## Description

La présente invention concerne un procédé de détection d'une défaillance d'un routeur.

Dans les réseaux paquets du type réseau Internet, des protocoles tels que les protocoles IGP - pour « Interior Gateway Protocol » en anglais - sont mis en oeuvre pour déterminer des tables de routage à partir desquelles des routeurs choisissent un chemin, c'est-à-dire une liste de routeurs, pour transmettre des paquets de données vers une destination finale, par exemple selon une approche du plus court chemin ou « Shortest Path First » en anglais.

Généralement, de tels protocoles IGP requièrent de connaître l'état de fonctionnement des routeurs du réseau de façon à ce que des paquets ne soient pas transmis vers des routeurs désactivés, par exemple suite à une défaillance, ce qui pourrait entraîner la perte des paquets ainsi acheminés.

Une telle défaillance étant par nature imprévisible, il est connu d'utiliser des messages de contrôle devant être émis par un routeur de telle sorte que, en l'absence de ces messages de contrôle, une défaillance dudit routeur soit automatiquement déterminée par des routeurs voisins détectant l'absence desdits messages de contrôle.

A titre d'exemple, les protocoles OSPF - pour Open Shortest Path First - ou IS-IS - Intermediate System to Intermediate System - sont des protocoles de routage dynamique, mettant en oeuvre de tels messages de contrôle dans le cadre du protocole IGP précédemment mentionné.

Plus précisément, un message de contrôle dit « Hello » message est transmis périodiquement par un routeur contrôlé vers des routeurs voisins, dénommés par la suite routeurs contrôleur, afin que ces derniers déterminent, respectivement, l'état activé ou désactivé du routeur contrôlé en fonction, respectivement, de la réception ou du manquement de messages de contrôle.

Il apparaît que les délais actuels de détection de la désactivation d'un routeur selon ce procédé de messages de contrôle sont, d'une part, insuffisants et, d'autre part, la source principale des retards dans la mise à jour des tables de routage.

De fait, la période généralement mise en oeuvre dans les réseaux pour transmettre des messages de contrôle est de 10 secondes tandis que, pour éviter des fausses détections, un nombre de l'ordre de 4 messages de contrôle doit être manquant pour qu'un routeur soit déclaré défaillant. En conséquence la détection d'une défaillance requiert un délai minimal de l'ordre de 40 secondes.

Lorsqu'une défaillance est ainsi détectée, le délai de transmission des messages informant les autres routeurs voisins de cette détection est de l'ordre de 2 secondes tandis que la mise à jour des tables de routage s'effectue dans un délai inférieur à la seconde, ce qui montre l'importance de la détection dans le délai de réaction du réseau à la défaillance d'un routeur.

En outre, ces procédés précédemment décrits présentent les problèmes de requérir une période de transmission, et un délai de détermination d'une défaillance - « Router Dead Interval » en anglais, proportionnel à la période de transmission - fixes et identiques pour l'ensemble des routeurs présents dans une même zone de contrôle, ce qui diminue la flexibilité dans leur mise en oeuvre.

Afin de pallier à ce problème, il a été proposé d'accroître la fréquence de transmission des messages de contrôle mais cet accroissement génère des paquets de données supplémentaires dans le réseau, surcharge les routeurs de façon généralement inutile et génère un nombre sensiblement plus élevé de fausses détections.

L'invention comprend la constatation que la désactivation d'un routeur suite à une défaillance est la conséquence d'un dysfonctionnement qui peut être parfois détecté préalablement à ladite défaillance. Par exemple, une panne d'un ventilateur entraîne une surchauffe du routeur qu'il équipe, puis son ultérieur défaillance, ce qui se traduit par une montée anormale de la température dudit routeur jusqu'à sa défaillance.

C'est pourquoi la présente invention concerne un procédé de détection d'une défaillance d'un routeur dans un réseau transmettant des données entre routeurs sous la forme de paquets, lesdits routeurs implémentant un protocole de détection de désactivations de routeurs via des messages de contrôle tels que, un routeur contrôlé transmettant périodiquement des messages de contrôle à au moins un routeur contrôleur, une désactivation dudit routeur contrôlé est détecté par ledit au moins un routeur contrôleur lorsqu'un nombre significatif de messages de contrôle sont manquants à la réception dudit au moins un routeur contrôleur, caractérisé en ce qu'il comprend les étapes suivantes:
- L'étape pour ledit routeur contrôlé de déterminer un risque de défaillance et une période de transmission des messages de contrôle dépendant de ce risque de défaillance, et
- L'étape pour ledit routeur contrôlé d'informer l'au moins un routeur contrôleur de la nouvelle période de transmission des messages de contrôle.

Grâce à l'invention, une faible période de transmission de messages de contrôle peut être mise en oeuvre de façon à détecter rapidement la défaillance d'un routeur.

Toutefois cette faible période de transmission est uniquement mise en oeuvre lorsqu'un risque de défaillance est détecté de telle sorte statistiquement, le réseau n'a pas à traiter un nombre significativement accru de paquets relatifs aux messages de contrôle.

Ainsi, l'invention combine les avantages liés à de longues périodes de transmission - stabilité et disponibilité du réseau - et de courtes périodes de transmission - détection rapide - des messages de contrôle.

Par ailleurs l'invention réduit le risque de fausses alarmes puisque l'augmentation du nombre de messages de contrôle, uniquement dans les situations où un risque de panne est détecté, tend à rendre négligeable le risque de fausses détections de défaillance, due à une faible période de transmission de messages de contrôle.

Dans une réalisation, le procédé comprend l'étape supplémentaire pour le routeur contrôlé de diminuer, respectivement d'accroître, sa période de transmission de messages de contrôle lorsque ledit risque de défaillance du routeur contrôlé augmente, respectivement diminue.

Selon une réalisation le procédé comprend l'étape supplémentaire pour le routeur contrôlé de transmettre au routeur contrôleur une nouvelle période de transmission dans des paquets transmettant des messages de contrôle.

Dans une réalisation, le procédé comprend l'étape supplémentaire pour l'au moins un routeur contrôleur de mettre en oeuvre différentes périodes de transmission avec différents routeurs contrôlés.

Selon une réalisation, le procédé comprend l'étape supplémentaire de déterminer le risque de défaillance à partir d'au moins un des paramètres suivants :
- une valeur relative à un élément physique du routeur,
- un état d'un élément du routeur,
- une qualité d'un signal du routeur,
- une analyse du trafic traité par le routeur,
- une durée de fonctionnement du routeur,
- un état du système d'exploitation du routeur ou d'un logiciel du routeur,
- des erreurs, des détections de virus et/ou d'activités malveillantes au sein d'un système d'exploitation du routeur et d'un noyau,
- une présence d'opérations de maintenance.

Selon une réalisation, le procédé comprend l'étape de mettre en oeuvre un routeur de contrôle du réseau informé par le routeur contrôlé et/ou par le routeur contrôleur des risques déterminés par le routeur contrôlé et/ou de la période de transmission mise en oeuvre par ledit routeur contrôlé afin d'informer des routeurs du réseau de la détection d'une défaillance parmi l'un d'eux.

Dans une réalisation, le procédé comprend l'étape de mettre en oeuvre un élément distant pour déterminer le risque de défaillance d'un routeur contrôlé et/ou une nouvelle période de transmission des messages de contrôle, ce risque de défaillance et/ou cette période de transmission déterminé par l'élément distant étant transmise au routeur contrôlé.

L'invention concerne également un procédé de détermination de tables de routage de paquets dans un réseau caractérisé en ce qu'il comprend l'étape de prendre en compte la désactivation d'un routeur détectée selon un procédé de détection d'un défaillance conforme à l'une des réalisations précédentes.

L'invention concerne également un routeur pour réseau de communication comportant des moyens pour transmettre périodiquement des messages de contrôle à au moins un routeur contrôleur afin de permettre audit routeur contrôleur de détecter une désactivation dudit routeur lorsqu'un nombre significatif de messages de contrôle sont manquants à la réception dudit routeur contrôleur, caractérisé en ce qu'il comprend:
- Des moyens pour déterminer un risque de défaillance interne dudit routeur,
- Des moyens pour déterminer une période de transmission desdits messages de contrôle en fonction dudit risque de défaillance interne, et
- Des moyens pour communiquer ladite période de transmission audit routeur contrôleur afin de, par exemple, mettre en oeuvre un procédé selon l'une des réalisations précédentes.

L'invention concerne également des paquets de données transmis entre routeurs d'un réseau de communication, lesdits routeurs implémentant un protocole de détection de désactivations de routeurs via des messages de contrôle tels que, un routeur contrôlé transmettant périodiquement des messages de contrôle à au moins un routeur contrôleur, une désactivation dudit routeur contrôlé est détectée par ledit routeur contrôleur lorsqu'un nombre significatif de messages de contrôle sont manquants à la réception dudit routeur contrôleur, caractérisé en ce qu'il comprend des données pour requérir à un routeur contrôleur de modifier sa période de transmission vis-à-vis d'un routeur contrôlé de façon à mettre en oeuvre un procédé selon l'une des réalisations précédentes.

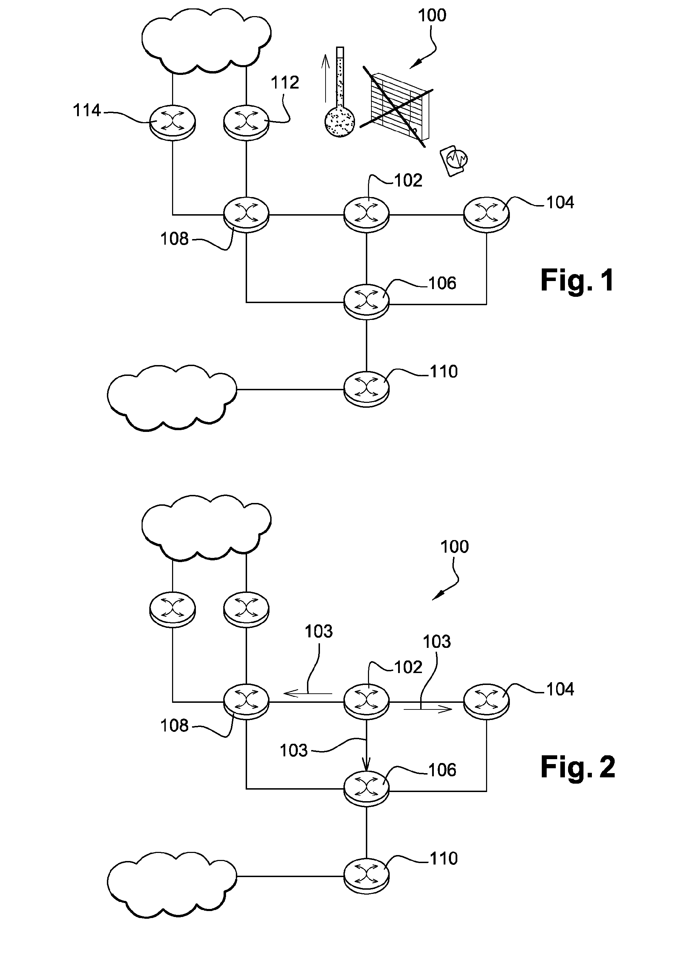

D'autres caractéristiques et avantages de l'invention apparaîtront à la lumière de la description ci-dessous, effectuée à titre illustrative et non limitatif, en référence aux figures1, 2, 3 et 4 ci-jointes sur lesquelles est représenté de façon schématique un procédé mettant en oeuvre une réalisation de l'invention.

Dans ces figures 1, 2, 3 et 4, des éléments identiques ou ayant des fonctions identiques sont identifiés par des nombres identiques.

En référence à la figure 1 est illustré un réseau 100 dans lequel des routeurs 102, 104, 106, ... 114, communiquant par paquets, implémentent un protocole de détection de défaillances de routeurs via des messages de contrôle.

Plus précisément un routeur contrôlé, par exemple 102, transmet périodiquement des messages de contrôle 103 (figure 2) à des routeurs contrôleur 104, 106 et 108 de telle sorte qu'une désactivation dudit routeur contrôlé 102 est détecté par au moins un desdits routeurs contrôleur 104, 106 et 108 lorsqu'un nombre significatif de messages de contrôle 103 sont manquants à la réception d'au moins un desdits routeurs contrôleur 104, 106 ou 108.

Dans cette réalisation de l'invention, le routeur 102 effectue, d'une part, la détermination d'un risque de défaillance et, d'autre part, la détermination de la période de transmission des messages de contrôle dudit risque de défaillance, cette période étant transmise auxdits routeurs contrôleur 104, 106 et 108 afin d'assurer le fonctionnement du système.

La détermination de la période de transmission par le contrôleur peut être effectuée à partir d'un paramètre tel que:
- une valeur relative à un élément physique du routeur comme une température, un état de tension d'une alimentation, une vitesse de rotation d'un ventilateur interne au routeur, un pourcentage d'occupation d'un processeur et/ou d'une mémoire. Par exemple, dans cet exemple, la valeur physique prise en compte est la température du routeur 102.
- un état d'un élément du routeur, en particulier un état d'un disque dur, par exemple via un système S.M.A.R.T. pour « Self-Monitoring and Reporting Technology » en anglais qui fournit des indicateurs relatifs à la fiabilité d'un disque dur.
- une qualité d'un signal traité, c'est-à-dire reçu, généré et/ou émis par le routeur. Par exemple, un taux d'erreur dans un signal, déterminé selon un un standard comme le BER pour « Bit Error Rate » en anglais, peut être révélateur d'un dysfonctionnement du routeur 102.
- une analyse du trafic de paquets traités par le routeur. Par exemple un temps d'attente ou un taux de paquets perdus croissant dans le traitement des paquets peut être un indicateur d'une dégradation dans le fonctionnement du routeur.
- une période de fonctionnement du routeur, notamment vis-à-vis de données transmises par le constructeur du routeur relatives aux durées moyennes avant une première défaillance ou des durées moyennes entre deux défaillances,
- un état d'un système d'exploitation ou d'un logiciel du routeur tel que le pourcentage d'occupation du processeur ou de la mémoire par ledit processus, une fuite mémoire, un problème logiciel, notamment vis-à-vis de la fermeture d'un fichier (« file descriptor leaking » en anglais), un verrou non relâché sur un fichier.
- des erreurs, des détections de virus et/ou d'activités malveillantes au sein du routeur, et notamment d'un système d'exploitation et de son noyau.
- des opérations de maintenance effectuées puisque un nombre significatif de défaillances (20%) résulte d'une opération de maintenance.

Il apparaît donc qu'il existe une grande diversité de paramètres pouvant être pris en compte pour déterminer un risque de défaillance d'un routeur, accessibles directement ou par l'intermédiaire de protocoles tels que les protocoles ACPI, pour « Advanced Configuration and Power Interface » en anglais, BMC pour « Basebord Management Card » en anglais, et/ou S.M.A.R.T déjà décrit.

En outre, différentes variantes de l'invention peuvent mettre en oeuvre des combinaisons, par exemple statistiques, des paramètres mentionnés ci-dessus et/ou un procédé d'autorégulation, par exemple au moyen d'une boucle de rétroaction, visant à ce que le routeur développe une évaluation d'un risque de plus en plus fiable.

A partir de ce risque de défaillance, le routeur 102 détermine une nouvelle période de transmission des messages de contrôle telle que cette période diminue, respectivement s'accroît, lorsque le risque de défaillance augmente, respectivement diminue.

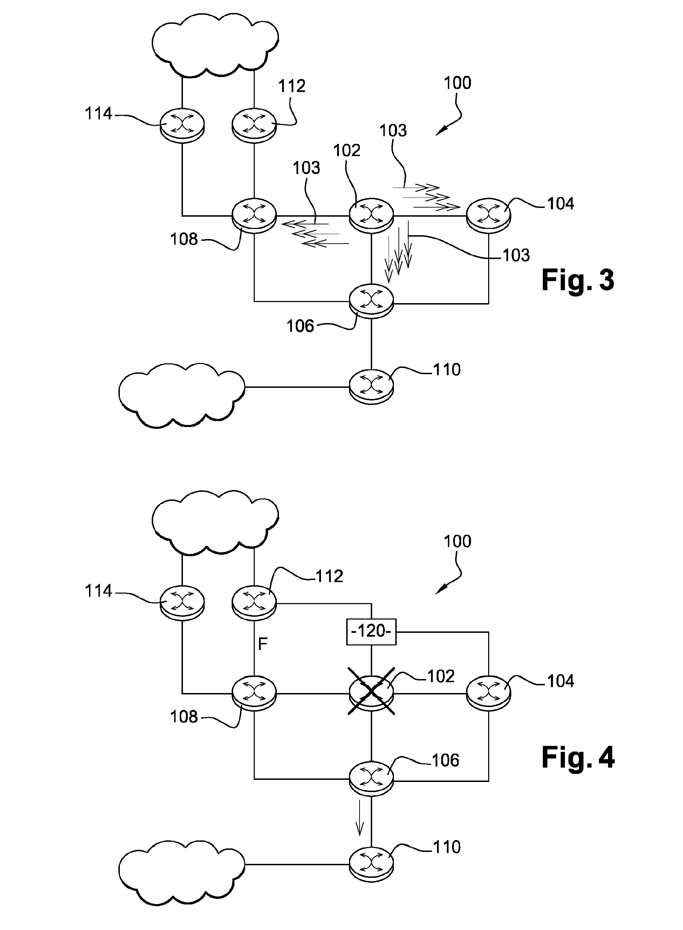

Ainsi un nombre plus élevé de messages de contrôle est transmis, dans un délai donné, lorsque le fonctionnement du routeur 102 se dégrade. Afin de synchroniser cette nouvelle période de transmission de messages de contrôle, le routeur contrôlé 102 informe les routeurs contrôleurs 104, 106 et 108 de la nouvelle période de transmission (figure 3).

Par exemple, cette nouvelle période peut être communiqué par le routeur contrôlé 102 aux routeurs contrôleur 104, 106 et 108 dans des paquets transmettant les messages de contrôle, par exemple dans des champs « Router Dead Interval » et « Hello interval » du protocole OSPF.

Suite à cette nouvelle période de transmission des messages de contrôle, les routeurs contrôleur 106, 108 et 110 doivent également diminuer, respectivement accroître, la période de transmission mise en oeuvre pour déclarer manquants des messages de contrôle lorsque ledit risque de défaillance du routeur contrôlé augmente, respectivement diminue.

Il apparaît alors que ces routeurs contrôleurs peuvent mettre en oeuvre différentes périodes de transmission avec différents routeurs contrôlés. Par exemple, en considérant que le routeur contrôleur 108 contrôle également les routeurs 112 et 114, trois périodes de transmission de messages de contrôle, propres à chaque niveau de risque des routeurs 102, 112 ou 114 peuvent être pris en compte par ce routeur contrôleur 108.

De façon corollaire, avec des périodes plus courtes de transmission de messages de contrôle, il apparaît que le délai pour déterminer une défaillance d'un routeur, ou « Router Dead Interval », peut être significativement réduit.

Par exemple, en considérant une transmission de messages de contrôle toutes les 0,2s lorsqu'un risque élevé de défaillance est détecté - suite à une température anormalement élevée -, la détermination d'une désactivation du routeur 102 peut être effectuée par un routeur contrôleur 104, 106 ou 108 en moins d'une seconde.

Dans ce cas la détection de cette désactivation est suffisamment rapide pour être prise en compte afin que, en un délai de l'ordre de 2 secondes, les routeurs voisins bloquent la transmission de paquets via le routeur défaillant 102 (figure 4).

La présente invention est susceptible de nombreuses variantes. Par exemple, un routeur de contrôle 120 du réseau 100 peut être informé de l'état, des risques et des détections d'un ensemble des routeurs 102, 104, 106, ....114 afin d'informer ces derniers de la détection d'une défaillance parmi l'un d'eux.

Finalement, dans une autre variante, un élément distant, tel qu'un routeur ou un serveur, peut déterminer le risque de défaillance d'un routeur contrôlé et/ou la nouvelle période de transmission des messages de contrôle puis transmettre ce risque de défaillance et/ou cette période de transmission au routeur contrôlé, qui en déduira une nouvelle période de transmission et/ou transmettra des messages de contrôle selon la nouvelle période de transmission.

Dans ce cas, l'élément distant peut transmettre le risque de défaillance et/ou la nouvelle période de transmission à des routeurs contrôleur dudit routeur contrôlé afin d'assurer le fonctionnement du système.

Par ailleurs, l'invention peut être mise en oeuvre dans un réseau utilisant différents protocoles tels que le protocole OSPF et/ou IS-IS, pour « Open Shortest Path First » et « Intermediate System to Intermediate System » en anglais, avec l'utilisation des protocoles type « Hello » interne en protocole de routage ou BFD, pour «Bidirectional Forwarding Detection » en anglais, comme messages de contrôle.

Finalement, il convient de noter qu'un routeur contrôlé - émetteur de messages de contrôle - peut également opérer comme routeur contrôleur - récepteur de messages de contrôle - de telle sorte que, par exemple, des routeurs identiques placés en différentes localisation d'un réseau se contrôlent mutuellement.

## Revendications

1. Procédé de détection d'une défaillance d'un routeur (102) dans un réseau (100) transmettant des données entre routeurs (102, 104, 106, ...114) sous la forme de paquets, lesdits routeurs (102, 104, 106, ...114) implémentant un protocole de détection de désactivations de routeurs via des messages de contrôle (103) tels que, un routeur contrôlé (102) transmettant périodiquement des messages de contrôle (103) à au moins un routeur contrôleur (104, 106, 108), une désactivation dudit routeur contrôlé (102) est détecté par ledit au moins un routeur contrôleur (104, 106, 108) lorsqu'un nombre significatif de messages de contrôle (103) sont manquants à la réception dudit au moins un routeur contrôleur (104, 106, 108), **caractérisé en ce qu'**il comprend les étapes suivantes:
- L'étape pour ledit routeur contrôlé (102) de déterminer un risque de défaillance et une période de transmission des messages de contrôle (103) dépendant de ce risque de défaillance, et
- L'étape pour ledit routeur contrôlé (102) d'informer l'au moins un routeur contrôleur (104, 106, 108) de la période de transmission des messages de contrôle (103).

2. Procédé selon la revendication 1 **caractérisé en ce qu'**il comprend l'étape supplémentaire pour le routeur contrôlé (102) de diminuer, respectivement d'accroître, sa période de transmission de messages de contrôle (103) lorsque ledit risque de défaillance du routeur contrôlé (102) augmente, respectivement diminue.

3. Procédé selon la revendication 1 ou 2 **caractérisé en ce qu'**il comprend l'étape supplémentaire pour le routeur contrôlé (102) de transmettre au routeur contrôleur (104, 106, 108) une nouvelle période de transmission dans des paquets transmettant des messages de contrôle (103).

4. Procédé selon l'une des revendications précédentes **caractérisé en ce qu'**il comprend l'étape supplémentaire pour l'au moins un routeur contrôleur (104, 106, 108) de mettre en oeuvre différentes périodes de transmission avec différents routeurs contrôlés (102, 112, 114).

5. Procédé selon l'une des revendications précédentes **caractérisé en ce qu'**il comprend l'étape supplémentaire de déterminer le risque de défaillance à partir d'au moins un des paramètres suivants :
- une valeur relative à un élément physique du routeur,
- un état d'un élément du routeur,
- une qualité d'un signal du routeur,
- une analyse du trafic traité par le routeur,
- une durée de fonctionnement du routeur,
- un état du système d'exploitation du routeur ou d'un logiciel du routeur,
- des erreurs, des détections de virus et/ou d'activités malveillantes au sein d'un système d'exploitation du routeur et d'un noyau,
- une présence d'opérations de maintenance.

6. Procédé selon l'une des revendications précédentes **caractérisé en ce qu'**il comprend l'étape de mettre en oeuvre un routeur de contrôle (120) du réseau (100) informé par le routeur contrôlé (102) et/ou par le routeur contrôleur (104, 106, 108) des risques déterminés par le routeur contrôlé (102) et/ou de la période de transmission mise en oeuvre par ledit routeur contrôlé (102) afin d'informer des routeurs du réseau de la détection d'une défaillance parmi l'un d'eux.

7. Procédé selon l'une des revendications précédentes **caractérisé en ce qu'**il comprend l'étape de mettre en oeuvre un élément distant pour déterminer le risque de défaillance d'un routeur contrôlé et/ou une nouvelle période de transmission des messages de contrôle, ce risque de défaillance et/ou cette période de transmission déterminé par l'élément distant étant transmise au routeur contrôlé.

8. Procédé de détermination de tables de routage de paquets dans un réseau **caractérisé en ce qu'**il comprend l'étape de prendre en compte la désactivation d'un routeur (102) détectée selon un procédé conforme à l'une des revendications précédentes.

9. Routeur (102) pour réseau (100) de communication comportant:
des moyens pour transmettre périodiquement des messages de contrôle (103) à au moins un routeur contrôleur (104, 106, 108) afin de permettre audit routeur contrôleur (104, 106, 108) de détecter une désactivation dudit routeur (102) lorsqu'un nombre significatif de messages de contrôle (103) sont manquants à la réception dudit routeur contrôleur (104, 106, 108), **caractérisé en ce qu'**il comprend:
- Des moyens pour déterminer un risque de défaillance interne dudit routeur,
- Des moyens pour déterminer une période de transmission desdits messages de contrôle (103) en fonction dudit risque de défaillance interne, et
- Des moyens pour communiquer ladite période de transmission audit routeur contrôleur (104, 106, 108).

10. Paquets de données transmis entre routeurs (102, 104, 106, ...114) d'un réseau (100) de communication, lesdits routeurs (102, 104, 106, ...114) implémentant un protocole de détection de désactivations de routeurs via des messages de contrôle (103) tels que, un routeur contrôlé (102) transmettant périodiquement des messages de contrôle (103) à au moins un routeur contrôleur (104, 106, 108), une désactivation dudit routeur contrôlé (102) est détectée par ledit routeur contrôleur (104, 106, 108) lorsqu'un nombre significatif de messages de contrôle (103) sont manquants à la réception dudit routeur contrôleur (104, 106, 108), **caractérisé en ce qu'**il comprend des données pour requérir à un routeur contrôleur de modifier sa période de transmission vis-à-vis d'un routeur contrôlé de façon à mettre en oeuvre un procédé selon l'une des revendications 1 à 8.
